# EUROPEAN PATENT SPECIFICATION

(11) **EP 3 411 741 B1**
(45) Date of publication and mention of the grant of the patent: **27.09.2023**
(21) Application number: 17705163.8
(22) Date of filing: 03.02.2017
(51) Int. Cl.: G02B 7/10, G03B 3/10, F03G 7/06, G03B 5/00

(54) **CAMERA LENS ACTUATION ARRANGEMENT**
KAMERALINSENBETÄTIGUNGSANORDNUNG
AGENCEMENT D'ACTIONNEMENT D'OBJECTIF D'APPAREIL DE PRISE DE VUES

(30) Priority: 05.02.2016 GB 201602100
(43) Date of publication of application: 12.12.2018
(73) Proprietor: Cambridge Mechatronics Limited, Cambridge CB4 1YG (GB)
(72) Inventor: HOWARTH, James, Cambridge CB4 1YG (GB); BUNTING, Stephen Matthew, Cambridge CB4 1YG (GB)
(74) Representative: Cambridge Mechatronics Limited
(86) International application number: PCT/GB2017/050277
(87) International publication number: WO 2017/134456

(56) References cited:
- US-A1- 2010 074 607
- US-A1- 2013 002 933

## Description

The present invention relates to camera lens actuation arrangement that comprises a support structure having an image sensor mounted thereon and a camera lens element arranged to focus an image on the image sensor, wherein lengths of shape memory alloy (SMA) wire are held between the support structure and the camera lens element for driving movement of the camera lens element along its optical axis.

SMA wires are known for use as actuators, and have particular advantages in miniature devices. As such, SMA wires are applied as actuators in a variety of devices including handheld devices, such as cameras and mobile phones. Such actuators may be used for example in miniature cameras for driving movement of the camera lens element along its optical axis, for example to effect focussing or zoom
Examples of a camera lens actuation arrangement of this type are disclosed in WO-2007/113478. In one example, the actuator comprises a piece of SMA wire connected at its ends to a support structure and hooked over a hook on a camera lens element. The portions of the piece of SMA wire on either side of a hook form a pair of lengths of SMA wire that extend at an angle of less than 180°, for example 90°, as viewed along the optical axis, but also apply a force to the camera lens element with a component parallel to the optical axis away from the image sensor, for driving the moment of the camera lens element away from the image sensor along the optical axis on contraction. The piece of SMA wire may be referred to as being arranged in an "angled-V" due to its orientation relative to the optical axis, because the lengths of SMA wire form a V-shape and a plane containing both lengths of SMA wire extends at an angle to the optical axis.

In another example with two pieces of SMA wire arranged in an angled-V, both pieces of SMA wire apply a force to the camera lens element with a component parallel to the optical axis away from the image sensor.

In WO-2007/113478, the camera lens element is supported on the support structure by a suspension system comprising resilient flexures that apply a biasing force against the lengths of SMA wire, for driving motion of the camera lens element parallel to the optical axis towards the image sensor.

US2013/002933A discloses an SMA actuation apparatus uses eight SMA actuator wires to move a moveable element supported on a support structure, for example to provide optical image stabilisation. US2010/074607A discloses a miniature camera lens actuation apparatus provides an auto-macro function in which a camera lens element has two focus positions.

According to the present invention, there is provided a camera lens actuation arrangement according to claim 1.

The two pairs of lengths of SMA wire apply a force to the camera lens element in opposite directions along the optical axis. Thus, in operation, the two pairs of lengths of SMA wire may each be driven simultaneously to maintain the tension in the wires and hold the camera lens element at a position controlled by the relative contraction of each pair of lengths of SMA wire. By driving the two pairs of lengths of SMA wire to contract differentially, the camera lens element may be driven to move along the optical axis. In this manner, the two pairs of lengths of SMA wire are opposed.

Such an arrangement with opposed pairs of lengths of SMA wire allows the camera lens actuation arrangement to respond more quickly than that of WO-2007/113478 wherein all the lengths of SMA wire drive movement in the same direction on contraction. The speed of operation in WO-2007/113478 is limited by the time taken for the wire to cool when movement of the camera lens element towards the image sensor by the resilient biasing is desired. In contrast, with the opposed pairs of lengths of SMA wire in the present invention, movement may be driven in both directions by heating of the respective pairs of lengths of SMA wire, which provides for an improved response as heating of SMA wires by electrical drive signals is quicker than natural cooling.

Various arrangements for the lengths of SMA wire are possible, for example as follows.

In one possible type of arrangement, the lengths of SMA wire are portions of first and second pieces of SMA wire. In this case, the first and second pieces of SMA wire may be each connected at their ends to the support structure and hooked over respective hooks on the camera lens element, so that the portions of the first piece of SMA wire on either side of the hook over which they are hooked form the first pair of lengths of SMA wire and the portions of the second piece of SMA wire on either side of the hook over which they are hooked form the second pair of lengths of SMA wire. The pieces of SMA wire may be arranged with the pairs of lengths of SMA wire extending at an angle of less than 180°, for example substantially 90°, as viewed along the optical axis, for example arranged in an angled-V.

In this type of arrangement, the first and second pieces of SMA wire may be the portions of the second piece of SMA wire on either side of the hook over which they are hooked form the second pair of lengths of SMA wire. The pieces of SMA wire may be arranged with the pairs of lengths of SMA wire extending at an angle of less than 180°, for example substantially 90°, as viewed along the optical axis, for example arranged in an angled-V.

In this type of arrangement, the first and second pieces of SMA wire may be hooked over respective hooks on the camera lens element arranged at opposite angular positions around the optical axis so that the first pair of lengths of SMA wire and the second pair of lengths of SMA wire are arranged to apply forces to the camera lens element perpendicular to the optical axis in opposite directions as between the first pair of lengths of SMA wire and the second pair of lengths of SMA wire.

In this type of arrangement, the forces applied to the camera lens element perpendicular to the optical axis are reduced as the forces from the two pairs of lengths of SMA wire are in opposite directions and so tend to counteract each other. Such reduction of the lateral forces provides significant advantages in the design of the camera lens actuation arrangement. In the case that a suspension system suspends the camera lens element on the support structure, the lateral loading forces on the suspension system are reduced. This reduces the constraints on the suspension system, allowing for an improved design and/or operation of the suspension system. For example, in the case that the suspension system is a ball bearing arrangement, the loading of the ball bearing arrangement is reduced, which allows for a simpler ball bearing arrangement and improves the response. Similarly, in the case that the suspension system is a flexure arrangement, the flexures are required to have less lateral stiffness, which allows the flexure arrangement to be designed with an improved response.

In another possible type of arrangement, each length of SMA wire is arranged on a respective one of four sides of the camera lens element as viewed along the optical axis, the first pair of lengths of SMA wire are arranged on two sides of the camera lens element that are adjacent each other, and the second pair of lengths of SMA wire are arranged on the other two sides of the camera lens element that are adjacent each other so that the first pair of lengths of SMA wire and the second pair of lengths of SMA wire are arranged to apply forces to the camera lens element perpendicular to the optical axis in opposite directions as between the first pair of lengths of SMA wire and the second pair of lengths of SMA wire.

In this type of arrangement, the forces applied to the camera lens element perpendicular to the optical axis are reduced as the forces from the two pairs of lengths of SMA wire are in opposite directions and so tend to counteract each other. Such reduction of the lateral forces provides significant advantages in the design of the camera lens actuation arrangement. In the case that a suspension system suspends the camera lens element on the support structure, the lateral loading forces on the suspension system are reduced. This reduces the constraints on the suspension system, allowing for an improved design and/or operation of the suspension system. For example, in the case that the suspension system is a ball bearing arrangement, the loading of the ball bearing arrangement is reduced, which allows for a simpler ball bearing arrangement and improves the response. Similarly, in the case that the suspension system is a flexure arrangement, the flexures are required to have less lateral stiffness, which allows the flexure arrangement to be designed with an improved response.

In yet another possible type of arrangement, each length of SMA wire is a separate piece of SMA wire arranged on a respective one of four sides of the camera lens element as viewed along the optical axis.

In an example of this possible type of arrangement, the first pair of lengths of SMA wire are arranged on two sides of the camera lens element that oppose each other and are arranged to apply forces to the camera lens element perpendicular to the optical axis in opposite directions as between the first pair of lengths of SMA wire, and the second pair of lengths of SMA wire are arranged on the other two sides of the camera lens element that oppose each other and are arranged to apply forces to the camera lens element perpendicular to the optical axis in opposite directions as between the second pair of lengths of SMA wire.

In this type of arrangement, the forces applied to the camera lens element perpendicular to the optical axis are reduced as the forces from the lengths of SMA wire within each pair are in opposite directions and so tend to counteract each other. Such reduction of the lateral forces provides significant advantages in the design of the camera lens actuation arrangement. In the case that a suspension system suspends the camera lens element on the support structure, the lateral loading forces on the suspension system are reduced. This reduces the constraints on the suspension system, allowing for an improved design and/or operation of the suspension system. For example, in the case that the suspension system is a ball bearing arrangement, the loading of the ball bearing arrangement is reduced, which allows for a simpler ball bearing arrangement and improves the response. Similarly, in the case that the suspension system is a flexure arrangement, the flexures are required to have less lateral stiffness, which allows the flexure arrangement to be designed with an improved response.

The present invention has particular advantage when applied to a miniature camera, for example where the camera lens element comprises one of more lenses having a diameter of no more than 10mm.

To allow better understanding, an embodiment of the present invention will now be described by way of non-limitative example with reference to the accompanying drawings, in which:
Fig. 1 is a schematic view of a camera lens actuation arrangement;
Fig. 2 is a perspective view of the camera lens actuation arrangement in a first configuration;
Fig. 3 is an exploded view of the camera lens actuation arrangement in the first configuration;
Figs. 4 and 5 are perspective views of the camera lens actuation arrangement in a second configuration, viewed from two angular positions around the optical axis;
Fig. 6 is an exploded view of the camera lens actuation arrangement in the second configuration;
Fig. 7 is a perspective view of the camera lens actuation arrangement in a third configuration;
Fig. 8 is a side view of the suspension system of the camera lens actuation arrangement in the third configuration;
Fig. 9 is a perspective view of the camera lens actuation arrangement in a fourth configuration;
Fig. 10 is a side view of a linkage of the suspension system of the camera lens actuation arrangement in the fourth configuration;
Fig. 11 is a side view of the suspension system of the camera lens actuation arrangement in the fourth configuration;
Fig. 12 is a perspective view of the camera lens actuation arrangement in the fifth configuration;
Fig. 13 is an exploded view of the camera lens actuation arrangement in the fifth configuration;
Fig. 14 is an exploded view of the camera lens actuation arrangement in the fifth configuration with alternative electrical connections;
Fig. 15 is a schematic plan view along the optical axis of the lengths of SMA wire in the camera lens actuation arrangement in the fifth configuration;
Fig. 16 is a perspective view of the camera lens actuation arrangement in the sixth configuration;
Fig. 17 is a perspective view of a seventh camera lens actuation arrangement in the seventh configuration;
Fig. 18 is a perspective view of the camera lens actuation arrangement in the eighth configuration;
Figs. 19 and 20 are diagrams of a control circuit for the camera lens actuation arrangement with two alternative manners of electrical connection.

There will now be described a camera lens actuation arrangement in eight configurations. The camera lens actuation arrangement is the same in each configuration, except for the differences set out below. Accordingly, common elements are given common reference numerals. Except for the differences explicitly set out, the description of common elements applies equally to each of the configurations of the camera lens actuation arrangements, but for brevity will not be repeated.

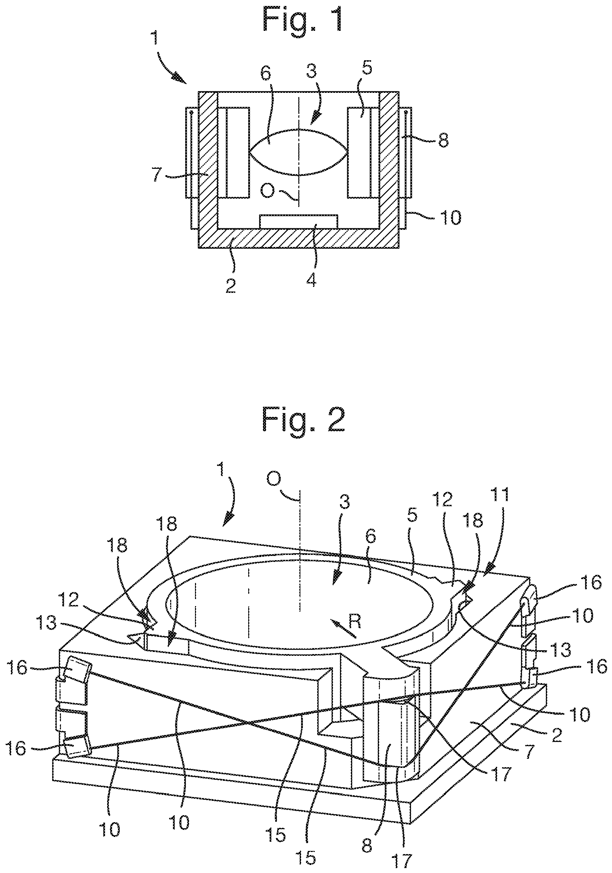

Fig. 1 schematically shows the camera lens actuation arrangement 1 in each of the configurations of the camera lens actuation arrangements and is arranged as follows.

The camera lens actuation arrangement 1 comprises a support structure 2 and a camera lens element 3.

The support structure 2 has an image sensor 4 mounted thereon. The image sensor 4 captures an image and may be of any suitable type, for example a CCD (charge-coupled device) or a CMOS (complimentary metal-oxide-semiconductor) device.

The camera lens element 3 is arranged to focus the image on the image sensor 4. The camera lens element 3 comprises a lens carriage 5 in the form of a cylindrical body supporting a lens 6 (or in general any number of lenses). The camera lens element 3 has an optical axis O on which the (or each) lens 6 is arranged. The camera lens actuation arrangement 1 is a miniature camera in which the (or each) lens 6 has a diameter of no more than 10 mm.

The support structure has walls 7 that extend around the camera lens element 3, and the camera lens element 3 has arms 8 that protrude through a gap in the walls 7.

The camera lens element 3 is movable along the optical axis O to change the image focus, for example to provide focussing or zoom. Movement of the camera lens element 3 along the optical axis O is driven by a total of four lengths 10 of SMA wire held in tension between the support structure 2 and the camera lens element 3, in particular the arms 8, in various configurations described in more detail below.

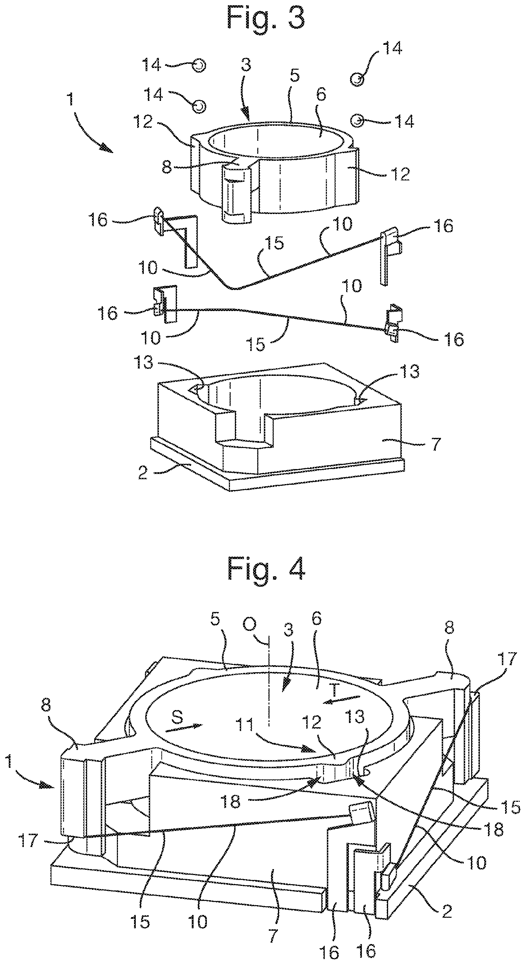

The camera lens actuation arrangement 1 in the first configuration is shown in Figs. 2 and 3. As will now be described in more detail, in the first configuration of the camera lens actuation arrangement 1, the four lengths 10 of SMA wire are formed from two pieces of SMA wire arranged as angled-Vs and coupled to the camera lens element 3 at the same angular position around the optical axis O.

The camera lens actuation arrangement 1 in the first configuration has a suspension system 11 in the form of a ball bearing arrangement that suspends the camera lens element 3 on the support structure 2 in a manner allowing movement of the camera lens element 3 along the optical axis O. In particular, the suspension system 11 comprises the following elements. Flanges 12 are formed on the lens carriage 5 of the camera lens element 3 and channels 13 are formed in the walls 7 of the support structure 2, in which the flanges 12 are located. Each flange 12 and the corresponding channel 13 in which it is located define between them two ball bearing races 18, one on each side of flange 12. Balls 14 are provided in the ball bearing races 18 to bear the camera lens element 3 on the support structure 2. The ball bearing races 18 extend parallel to the optical axis O guiding movement of the camera lens element 3 along the optical axis O with minimum tilt.

The four lengths 10 of SMA wire are portions of first and second pieces 15 of SMA wire, each arranged as angled-Vs as follows.

Each of the first and second pieces 15 of SMA wire are connected at their ends to the support structure 2 by crimp portions 16. The crimp portions 16 are made of metal and are crimped over the ends of the pieces 15 of SMA wire to provide a mechanical and electrical connection. The crimp portions 16 are fixed to the support structure 2, in particular to the walls 7.

Each of the first and second pieces 15 of SMA wire is also hooked over respective hooks 17 formed on the same arm 8 of the camera lens element 3, and hence at the same angular position around the optical axis O. As such, in the first configuration only one arm 8 is provided. The portions of the first piece 15 of SMA wire on either side of the hook 17 over which it is hooked form a first pair of lengths 10 of SMA wire, and similarly the portions of the second piece 15 of SMA wire on either side of the hook 17 over which it is hooked form a second pair of lengths 10 of SMA wire.

Each pair of lengths 10 of SMA wire are arranged in an angled-V. That is, the lengths 10 of SMA wire form a V-shape and the plane containing both lengths 10 of SMA wire extends at an angle (a non-zero, acute angle) to the optical axis O. Thus, the two lengths 10 of SMA wire in each pair extend along two adjacent sides of the camera lens element 3 at an angle of substantially 90° as viewed along the optical axis O. More generally, the angle of 90° could be any angle less than 180° as viewed along the optical axis O. Furthermore, each length 10 of SMA wire is inclined as viewed radially outwards of the optical axis O.

As a result of inclination of the lengths 10 of SMA wire, each length 10 of SMA wire applies a force with a component parallel to the optical axis O. Compared to an SMA wire arranged parallel to the optical axis O, the inclination allows a greater length of SMA wire to be provided, thereby increasing the stroke due to a gearing effect as described in WO-2007/113478.

Similarly, the angled-V arrangement allows the two lengths 10 of SMA wire in each pair to extend along the two adjacent sides of the camera lens element 3 which allows the lengths 10 of SMA wire to be longer than if they were both arranged on the same side of the camera lens actuation arrangement 1, as also described in WO-2007/113478.

However, the first pair of lengths 10 of SMA wire are inclined in a direction such that they apply a force with a component parallel to the optical axis O in a first direction (for example down in Fig. 1), whereas the second pair of lengths 10 of SMA wire are inclined in a direction such that they apply a force with a component parallel to the optical axis O in a second direction opposite to the first direction (for example up in Fig. 1). Thus, the lengths 10 of SMA wire of each pair cross each other on sides of the camera lens element 3 on which they are arranged. In contrast to WO-2007/113478 where all the lengths of SMA wire apply a force with a component parallel to the optical axis O in the same direction, the two pairs of lengths 10 of SMA wire apply a force to the camera lens element in opposite directions along the optical axis O as between the pairs.

Thus, in operation, the two pairs of lengths 10 of SMA wire are driven simultaneously to maintain the tension in the SMA wires and hold the camera lens element 3 at a position along the optical axis O controlled by the relative contraction of each pair of lengths 10 of SMA wire. By driving the two pairs of lengths 10 of SMA wire to contract differentially, the camera lens element may be driven to move along the optical axis O to any position in a range of movement. The magnitude of the range of movement depends on the length and angle of inclination of the lengths 10 of SMA wire and the range of contraction of the lengths 10 of SMA wires within their normal operating parameters. The driving is achieved by a control circuit 100 supplying drive signals to the lengths 10 of SMA wire, as described in more detail below.

In this manner, the two pairs of lengths 10 of SMA wire are opposed, which provides a quicker response than the arrangement of WO-2007/113478 wherein the response is limited by the time taken for the SMA wire to cool when the camera lens element is moved in the direction in which the SMA is caused to expand by the resilient biasing. This is because in the camera lens actuation arrangement 1 movement of the camera lens element 3 along the optical axis O may be driven in either direction by one of the pairs of lengths 10 of SMA wire formed by one of the pieces 15 of SMA wire, which has an improved response as heating of SMA wires by electrical drive signals is quicker than cooling.

As the first and second pieces 15 of SMA wire are hooked over respective hooks 17 on the same arm 8 of the camera lens element 3, and hence at the same angular position around the optical axis O, the lengths 10 of SMA wire of each pair are arranged on the same two sides of the camera lens element 3. Consequently, the two pairs of lengths 10 of SMA wire apply forces to the camera lens element 3 perpendicular to the optical axis O in the same direction, that is the direction R shown in Fig. 2. This means that the two pairs of lengths 10 of SMA wire formed by the two pieces 15 of SMA wire load the suspension system 11 in the same direction. This means that only one of the ball bearing races 18 on the side of each flange 12 is loaded. Thus, the ball bearing race 18 on the other side of each flange 12 may optionally be omitted. However, such loading of the suspension system 10 is undesirable and limits performance. That problem is reduced in the second configuration of the camera lens actuation arrangement 1.

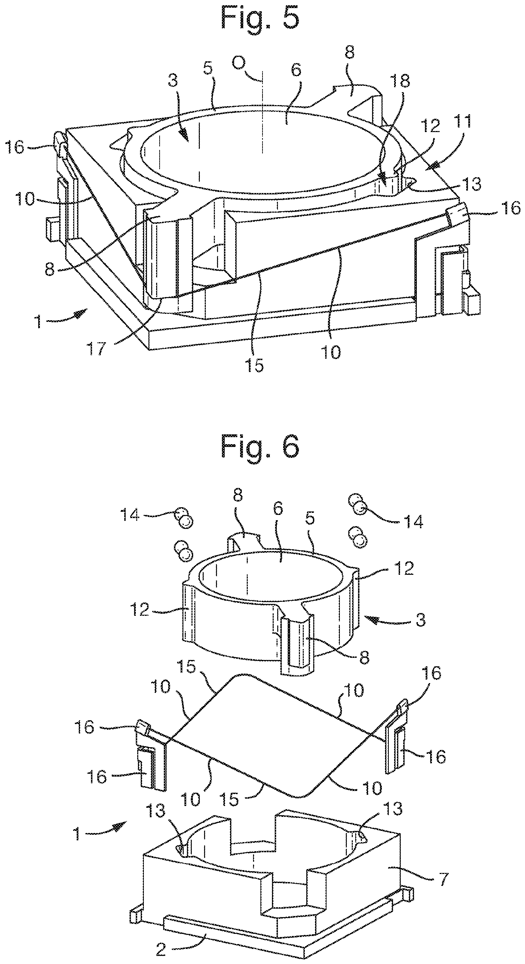

The camera lens actuation arrangement 1 in the second configuration is shown in Figs. 4 to 6. As will now be described in more detail, in the second configuration of the camera lens actuation arrangement 1, the four lengths 10 of SMA wire are formed from two pieces of SMA wire arranged as angled-Vs and coupled to the camera lens element 3 at opposite angular positions around the optical axis O.

The camera lens actuation arrangement 1 in the second configuration has a suspension system 11 in the form of a ball bearing arrangement that suspends the camera lens element 3 on the support structure 2 in a manner allowing movement of the camera lens element 3 along the optical axis O. The suspension system 11 has the same form as in the first configuration of the camera lens arrangement 1. Accordingly, the description of the suspension system 11 given above applies equally to the camera lens actuation arrangement 1 in the second configuration and so will not be repeated.

Similarly, as in the first configuration, in the second configuration the four lengths 10 of SMA wire are portions of first and second pieces 15 of SMA wire, each arranged as angled-Vs and the description given above applies equally, except for the difference that in the second configuration the first and second pieces 15 of SMA wire are hooked over respective hooks 17 formed on arms 8 in opposite corners of the camera lens element 3, and hence at opposite angular positions around the optical axis O. This means that the first pair and second pairs of lengths 10 of SMA wire apply forces to the camera lens element 2 perpendicular to the optical axis in opposite directions as between the first pair of lengths 10 of SMA wire and the second pair of lengths of SMA wire 10, that is in opposite directions S and T shown in Fig. 4.

The two pairs of lengths 10 of SMA wire are opposed in the same way as in the first configuration, that is the first pair of lengths 10 of SMA wire apply a force with a component parallel to the optical axis O in a first direction, whereas the second pair of lengths 10 of SMA wire apply a force with a component parallel to the optical axis O in a second direction opposite to the first direction. Thus, as far as driving movement along the optical axis O is concerned the camera lens actuation arrangement 1 in the second configuration operates in the same manner as in the first configuration, and the above description applies equally.

However, in the second configuration, the forces applied to the camera lens element 3 perpendicular to the optical axis O are reduced as the forces from the lengths 10 of SMA wire are in opposite directions as between the two pairs and so tend to counteract each other. Such reduction of the lateral forces provides significant advantages because the lateral loading forces on the suspension system 11 are reduced, thereby providing a response that is improved as compared to the first configuration.

Also, in the second configuration, as a result of the first and second pieces 15 of SMA wire being hooked over respective hooks 17 at opposite angular positions around the optical axis O, each length 10 of SMA wire is arranged on a respective one of four sides of the camera lens element 3 as viewed along the optical axis O, that is with the lengths 10 of SMA wire of the first pair formed by a first piece 15 of SMA wire on two sides of the camera lens element 3 that are adjacent each other, and with the lengths 10 of SMA wire of the second pair formed by a second piece 15 of SMA wire on the other two sides of the camera lens element 3 that are adjacent each other. As a result, the lengths 10 of SMA wire do not cross, which reduces the risk of accidentally touching and causing an electrical short, and similarly reduces the need for protection as may be required in the first configuration, for example providing an insulating coating on the lengths 10 of SMA wire and/or providing sufficient clearance between the two pieces 15 of SMA wires which increases the footprint of the camera lens actuation arrangement 1.

The second configuration does require two arms 8 on opposite corners, but that is relatively straightforward to implement.

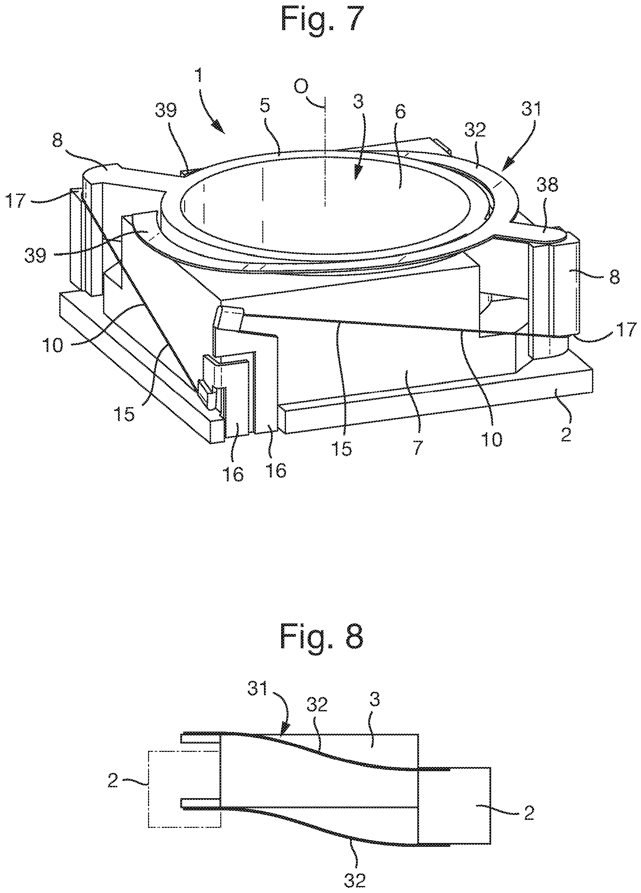

The camera lens actuation arrangement 1 in the third configuration is shown in Figs. 7 and 8. In the third configuration of the camera lens actuation arrangement 1, the four lengths 10 of SMA wire are formed from two pieces of SMA wire arranged as angled-Vs and coupled to the camera lens element 3 at opposite angular positions around the optical axis O, in an arrangement similar to that of the second configuration.

The camera lens actuation arrangement 1 in the third configuration has a suspension system 31 in the form of a flexure arrangement, rather than a ball bearing arrangement, that suspends the camera lens element 3 on the support structure 2 in a manner allowing movement of the camera lens element 3 along the optical axis O.

In particular, the suspension system 31 comprises a pair of flexures 32 arranged at opposite ends of the camera lens element 3. One of the flexures 32 is visible in Fig. 7 and the other flexure 32 is located in a corresponding location at the opposite end of the camera lens element 3. The flexures 32 are elongate beams that are shaped, as viewed along the optical axis O, as partial rings that extend around the end of the lens carriage 5 so as to lie outside the area of the lens 6 without obscuring the imaging. One end 38 of each flexure 32 (the right hand side in Fig. 7 above one of the hooks 8) is attached to the camera lens element 3, in particular to the lens carriage 5. The other ends 39 of each flexure 32 (the left hand end in Fig. 7) is attached to the support structure 2, in particular to the walls 7. The flexures 32 are made from a resilient material, such as a metal, for example stainless steel or another hard metal or a plastic.

The flexures 32 are shaped as elongate beams. The width of the flexures 32 radially of the optical axis O is greater than the thickness of the flexures 32 parallel to the optical axis O, such that the flexures 32 bend to allow axial movement of the camera lens element 3 along the optical axis O, but resist lateral movement of the camera lens element 3 radially of the optical axis O. Fig. 8 shows the bending of the flexures 32 to take up an S-shape when the camera lens element 3 moves away (upward in this case) from the image sensor 4. A similar, but reversed, S-shape is taken up when the camera lens element 3 moves towards the image sensor 4.

The benefit of the suspension system 31 is in ease of manufacture, because the flexures 32 may be cut from sheet material, and easily attached, for example by adhesive or welding, to the support structure 2 and the camera lens element 3. The materials are less costly than balls and the assembly process easier and therefore cheaper than assembling balls into the ball bearing races 18. The tilt performance however may be less good than the suspension system 11 in the form of a ball bearing arrangement, but may be adequate for many purposes.

In the third configuration, the four lengths 10 of SMA wire are portions of first and second pieces 15 of SMA wire, each arranged as angled-Vs in the same manner as the second configuration and so the description given above applies equally, including the advantage that the forces applied to the camera lens element 3 perpendicular to the optical axis O are reduced as the forces from the lengths 10 of SMA wire are in opposite directions as between the two pairs and so tend to counteract each other. Such reduction of the lateral forces provides significant advantages because the lateral loading forces on the suspension system 31 are reduced, allowing for a simpler flexure arrangement as compared to the lengths 10 of SMA wire having the same arrangement as in the first configuration, because the flexures 32 are required to have less lateral stiffness, which allows the flexure arrangement to be designed with an improved response.

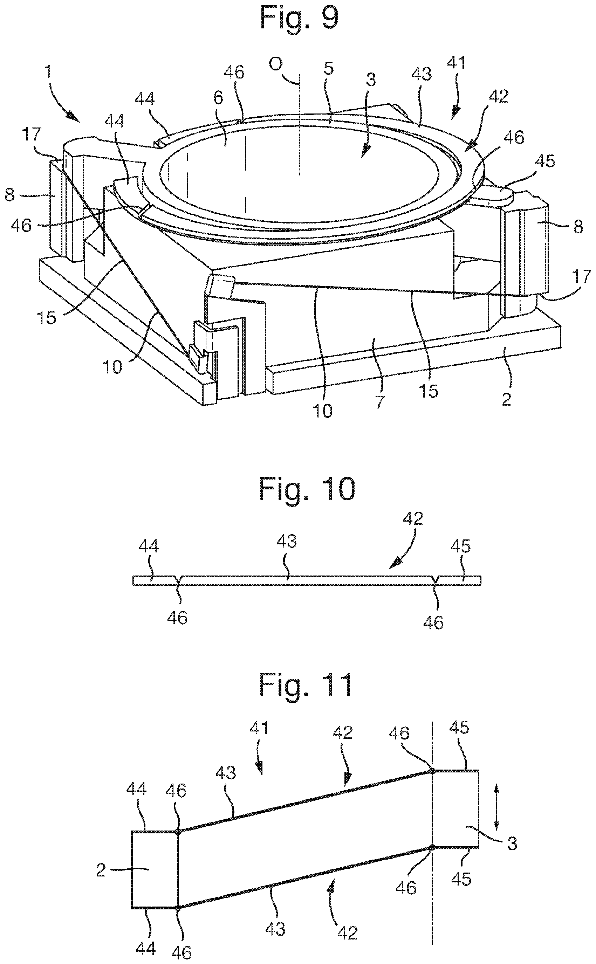

The camera lens actuation arrangement 1 in the fourth configuration is shown in Fig. 9 to 11. As will now be described in more detail, in the fourth configuration of the camera lens actuation arrangement 1, the four lengths 10 of SMA wire are formed from two pieces of SMA wire arranged as angled-Vs and coupled to the camera lens element 3 at opposite angular positions around the optical axis O in an arrangement similar to that of the second configuration.

The camera lens actuation arrangement 1 in the fourth configuration has a suspension system 41 in the form of a four-bar linkage arrangement, rather than a ball bearing arrangement, that suspends the camera lens element 3 on the support structure 2 in a manner allowing movement of the camera lens element 3 along the optical axis O.

In particular, the suspension system 41 comprises two suspension elements 42 arranged at opposite ends of the camera lens element 3. One of the suspension elements 42 is visible in Fig. 9 and the other suspension element 42 is located in a corresponding location at the opposite end of the camera lens element 3. The suspension elements 42 are elongate beams that are shaped, as viewed along the optical axis O, as partial rings that extend around the end of the lens carriage 5 so as to lie outside the area of the lens 6 without obscuring the imaging.

As shown in Fig. 10, each suspension element 42 comprises a rigid bar 43 which is an elongate beam that is shaped, as viewed along the optical axis O, as a partial ring that extends around the end of the lens carriage 5 so as to lie outside the area of the lens 6 without obscuring the imaging. Each suspension element 42 further comprises a pair of first tabs 44 and a second tab 45 at opposite ends of the rigid bar 43. The pair of first tabs 44 and the second tab 45 are each attached to the rigid bar 43 by hinge portions 46. Each suspension element 42 may be formed as a single piece from sheet material in which the hinge portions 46 are regions that are thinned along a line.

The first pair of tabs 44 are attached to the support structure 2 and the second tab 45 is attached to the camera lens element 3. As a result and as shown in Fig. 11, the suspension element 42 forms two bars of a four-bar linkage arrangement, in which the support structure 2 and the camera lens element 3 form the other two bars, connected by the hinge portions 46. This four-bar linkage arrangement of the suspension system 41 allows movement of the camera lens element 3 along the optical axis O by virtue of bending at the hinge portions 46. Fig. 11 illustrates the camera lens element 3 having moved away (upward in this case) from the image sensor 4. A similar, but reversed, shape is taken up when the camera lens element 3 moves towards the image sensor 4.

One benefit of the suspension arrangement 41 is in ease of manufacture, because the suspension element 42 may be cut from sheet material, and easily attached, for example by adhesive or welding, to the support structure 2 and the camera lens element 3. The materials are less costly than balls and the assembly process easier and therefore cheaper than assembling balls into ball bearing races 18. Another benefit of the suspension arrangement 41 is that the lens carriage is constrained to move accurately along the optical axis O, since such a four-bar linkage arrangement necessarily provides substantially parallel movement. As such, tilt is reduced compared to the suspension arrangement 31.

In the fourth configuration, the four lengths 10 of SMA wire are portions of first and second pieces 15 of SMA wire, each arranged as angled-Vs in the same manner as the second configuration and so the description given above applies equally, including the advantage that the forces applied to the camera lens element 3 perpendicular to the optical axis O are reduced as the forces from the lengths 10 of SMA wire are in opposite directions as between the two pairs and so tend to counteract each other. Such reduction of the lateral forces provides significant advantages because the lateral loading forces on the suspension system 41 are reduced, allowing for a simpler four-bar linkage arrangement as compared to the lengths 10 of SMA wire having the same arrangement as in the first configuration.

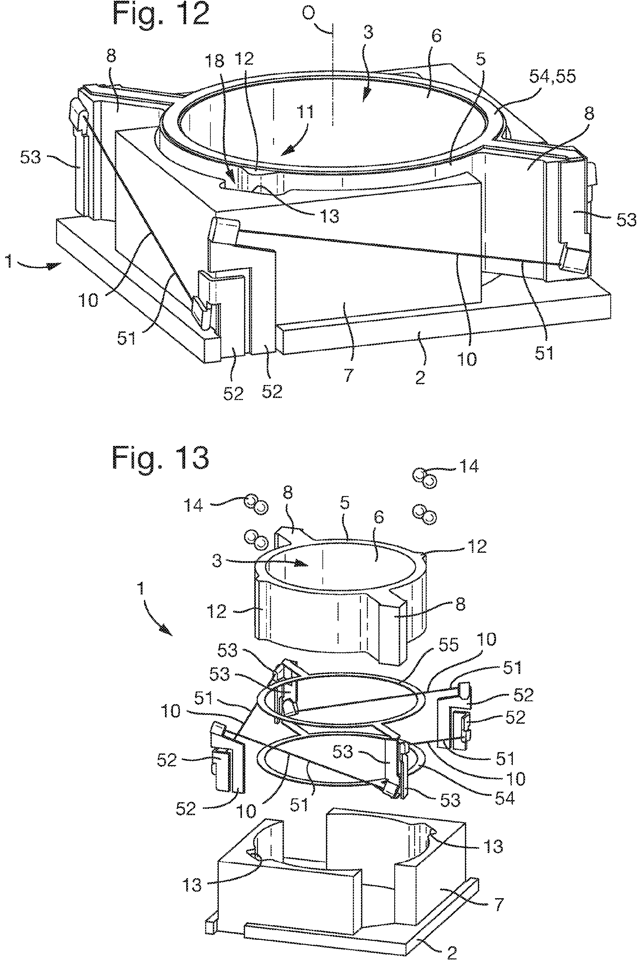

The camera lens actuation arrangement 1 in the fifth configuration is shown in Figs. 12 to 15. As will now be described in more detail, in the fifth configuration of the camera lens actuation arrangement 1, the four lengths 10 of SMA wire are formed from four pieces 51 of SMA wire.

The camera lens actuation arrangement 1 in the fifth configuration has a suspension system 11 in the form of a ball bearing arrangement that suspends the camera lens element 3 on the support structure 2 in a manner allowing movement of the camera lens element 3 along the optical axis O. The suspension system 11 has the same form as in the second configuration of the camera lens actuation arrangement 1. Accordingly, the description of the suspension system 11 given above applies equally to the camera lens actuation arrangement 1 in the fifth configuration and so will not be repeated.

In contrast to the first to fourth configurations where the four lengths 10 of SMA wire are formed from two pieces of SMA wire arranged as angled-Vs, in the fifth configuration, the four lengths 10 of SMA wire are separate pieces 51 of SMA wire arranged as follows.

Each of the pieces 51 of SMA wire forming the respective lengths 10 of SMA wire is arranged on a respective one of four sides of the camera lens element 3 as viewed along the optical axis. Each of the pieces 51 of SMA wire is connected at one end to the support structure 2, in particular to the walls 7, by a crimp portion 52 and at the other end to the camera lens element 3, in particular to one of the arms 8, by a crimp portion 53. The crimp portions 52 and 53 are made of metal and are crimped over the ends of the pieces 51 of SMA wire to provide a mechanical and electrical connection.

Each length 10 of SMA wire is inclined as viewed radially outwards of the optical axis O. As a result of inclination of the lengths 10 of SMA wire, each length 10 of SMA wire applies a force with a component parallel to the optical axis O. Compared to an SMA wire arranged parallel to the optical axis O, the inclination allows a greater length of SMA wire to be provided, thereby increasing the stroke due to a gearing effect as described in WO-2007/113478. Similarly, due to the location along four sides of the camera lens element 3, each of the lengths 10 of SMA wire may have a maximum extent within the footprint of the camera lens actuation arrangement 1 as viewed along the optical axis O.

Each length 10 of SMA wire is inclined in the same sense as viewed radially outwards of the optical axis O. Further, the lengths 10 of SMA wire form first and second pairs of lengths 10 of SMA that apply forces to the camera lens element 3 with components parallel to the optical axis O in opposite directions due to their respective connections to the support structure 2 and the camera lens element 3, as follows.

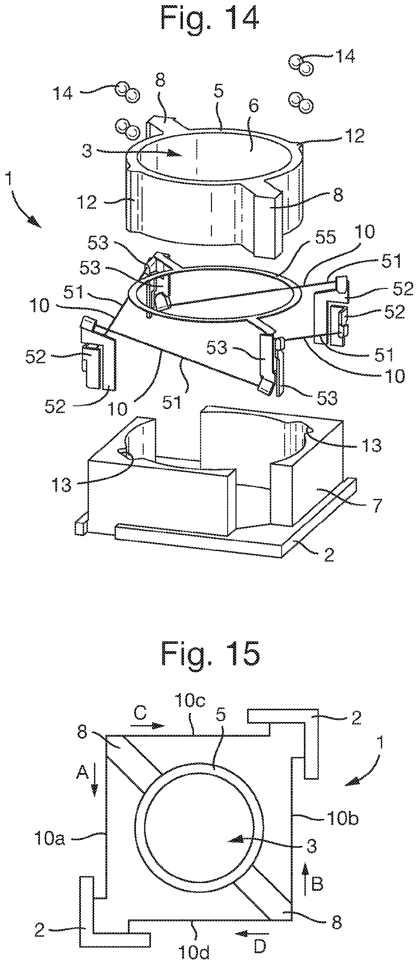

The first pair of lengths 10 of SMA wire are arranged on two sides of the camera lens element 3 that oppose each other (for example left and right sides as viewed along the optical axis O) and are connected to the camera lens element 3 to apply a force to the camera lens element 3 with a component parallel to the optical axis in a first direction (for example up in Fig. 12). The second pair of lengths 10 of SMA wire are arranged on the other two sides of the camera lens element that oppose each other (for example front and back sides as viewed along the optical axis O) and are connected to the camera lens element 3 to apply a force to the camera lens element 3 with a component parallel to the optical axis in a second direction opposite to the first direction (for example down in Fig. 12). This arrangement can be seen in perspective view in Figs. 13 and 14 and in the schematic view of Fig. 15. Herein, the lengths 10a and 10b of SMA wires arranged on two sides of the camera lens element 3 that oppose each other are the first pair and are inclined such that they apply a force to the camera lens element 3 with a component parallel to the optical axis in a first direction into the drawings sheet, whereas the lengths 10c and 10d of SMA wires arranged on the other two sides of the camera lens element 3 that oppose each other are the second pair and are inclined such that they apply a force to the camera lens element 3 with a component parallel to the optical axis in a second direction out of the drawings sheet. Thus, the lengths 10 of SMA wire on any two adjacent sides (for example the lengths 10a and 10c of SMA wire) are connected at the intermediate corner to the same one of the support structure 2 or the camera lens element 3 (for example the support structure 2 in the case of the lengths 10a and 10c of SMA wire).

Thus, in operation, the two pairs of lengths 10 of SMA wire are driven simultaneously to maintain the tension in the SMA wires and hold the camera lens element 3 at a position along the optical axis O controlled by the relative contraction of each pair of lengths 10 of SMA wire. By driving the two pairs of lengths of SMA wire to contract differentially, the camera lens element may be driven to move along the optical axis O to any position in a range of movement. The magnitude of the range of movement depends on the length and angle of inclination of the lengths 10 of SMA wire and the range of contraction of the lengths 10 of SMA wires within their normal operating parameters.

In this manner, the two pairs of lengths 10 of SMA wire are opposed, which provides a quicker response than the arrangement of WO-2007/113478 wherein the response is limited by the time taken for the SMA wire to cool when the camera lens element is moved in the direction in which the SMA is caused to expand by the resilient biasing. This is because in the camera lens actuation arrangement 1 movement the camera lens element 3 along the optical axis O may be driven in either direction by one of the pairs of lengths 10 of SMA wire formed by one of the pieces 15 of SMA wire, which has an improved response as heating of SMA wires by electrical drive signals is quicker than cooling.

Also as a result of the arrangement, the first pair of lengths 10a and 10b of SMA wire are arranged to apply forces to the camera lens element 3 perpendicular to the optical axis O (i.e. in the plane perpendicular to the optical axis O) in opposite directions as between the first pair of lengths 10a and 10b of SMA wire. Similarly, the second pair of lengths 10c and 10d of SMA wire are also arranged to apply forces to the camera lens element 3 perpendicular to axis O (i.e. in the plane perpendicular to the optical axis O) in opposite directions as between the second pair of lengths 10c and 10d of SMA wire. For example, as shown in Fig. 15, the first pair of lengths 10a and 10b of SMA wire apply forces to the camera lens element 3 perpendicular to the optical axis O in opposite directions A and B, and similarly the second pair of lengths 10c and 10d of SMA wire apply forces to the camera lens element 3 perpendicular to the optical axis O in opposite directions C and D.

Consequently, the forces applied to the camera lens element 3 perpendicular to the optical axis O are reduced as the forces from the lengths 10 of SMA wire are in opposite directions as between the lengths 10 of SMA wire within each pair and so tend to counteract each other. Such reduction of the lateral forces provides significant advantages because the lateral loading forces on the suspension system 11 are reduced, allowing for a simpler ball bearing arrangement with response that is improved as compared to the first configuration.

The electrical connection of the lengths 10 of SMA wire at the camera lens element 3 will now be considered.

A first possibility shown in Fig. 13 is that the camera lens element 3 further comprises two conductive connectors 54. The conductive connectors 54 are arranged at opposite ends of the camera lens element 3 and are shaped as rings that extend around the respective ends of the lens carriage 5 so as to lie outside the area of the lens 6 without obscuring the imaging. The conductive connectors 54 are in electrical contact with respective crimp portions 53 to provide electrical connection of lengths 10 of SMA wire. Specifically, each of the conductive connectors 54 electrically connects together one of the pair of lengths 10 of SMA wire at the camera lens element 3. That is the conductive connector 54 that is uppermost in Fig. 13 electrically connects together the first pair of lengths 10a and 10b of SMA wire and the conductive connector 54 that is lowermost in Fig. 13 electrically connects together the second pair of lengths 10c and 10d of SMA wire.

In this case, the two crimp portions 53 on each arm 8 are electrically isolated from each other.

With this manner of electrical connection, a respective drive signal may be applied at the support structure across each pair of lengths 10 of SMA wire, without connection of the control circuit 100 to the lengths 10 of SMA wire at the camera lens element 3. The same drive signal is thus supplied through each length 10 of SMA wire within a pair, via the respective conductive connector 54.

A second possibility shown in Fig. 14 is that the camera lens element 3 further comprises a single conductive connector 55. The conductive connector 55 is arranged at one end of the camera lens element 3 and is shaped as a ring that extends around the end of the lens carriage 5 so as to lie outside the area of the lens 6 without obscuring the imaging. The conductive connector 55 is in electrical contact with all the crimp portions 53 to provide a common electrical connection of all the lengths 10 of SMA wire. In this case, the two crimp portions 53 on each arm 8 are electrically connected together.

With this manner of electrical connection, a separate drive signal may be applied to each length 10 of SMA wire at the support structure, without connection of the control circuit 100 to the lengths 10 of SMA wire at the camera lens element 3, using a drive scheme described further below.

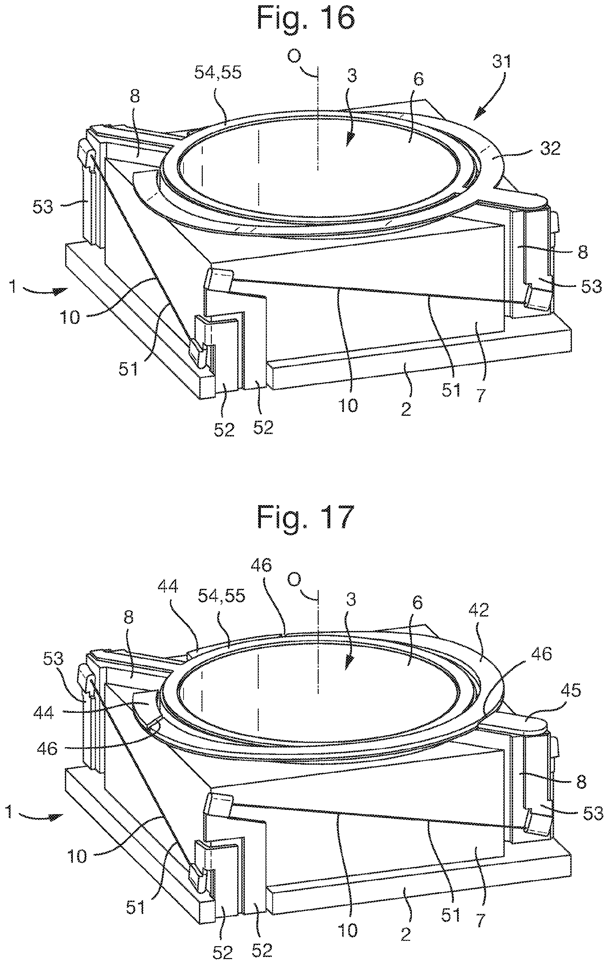

The camera lens actuation arrangement 1 in the sixth configuration is shown in Fig. 16. As will now be described in more detail, in the sixth configuration of the camera lens actuation arrangement 1, the four lengths 10 of SMA wire are formed from four pieces 51 of SMA wire in an arrangement similar to that of the fifth configuration.

The camera lens actuation arrangement 1 in the sixth configuration has a suspension system 31 in the form of a flexure arrangement, rather than a ball bearing arrangement, that suspends the camera lens element 3 on the support structure 2 in a manner allowing movement of the camera lens element 3 along the optical axis O. The suspension system 31 has the same form as in the third configuration (shown in in Figs. 7 and 8) of the camera lens actuation arrangement 1. Accordingly, the description of the suspension system 31 given above applies equally to the camera lens actuation arrangement 1 in the sixth configuration and so will not be repeated.

In the sixth configuration, the four lengths 10 of SMA wire are separate pieces 51 of SMA wire arranged in the same manner as the fifth configuration and so the description given above applies equally, including the advantage that the forces applied to the camera lens element 3 perpendicular to the optical axis O are reduced as the forces from the lengths 10 of SMA wire are in opposite directions as between the lengths 10 of SMA wire within each pair and so tend to counteract each other. Such reduction of the lateral forces provides significant advantages because the lateral loading forces on the suspension system 31 are reduced, allowing for a simpler flexure arrangement as compared to the lengths 10 of SMA wire having the same arrangement as in the first configuration, because the flexures 32 are required to have less lateral stiffness, which allows the flexure arrangement to be designed with an improved response.

The camera lens actuation arrangement 1 in the seventh configuration is shown in Fig. 17. As will now be described in more detail, in the seventh configuration of the camera lens actuation arrangement 1, the four lengths 10 of SMA wire are formed from four pieces 51 of SMA wire in an arrangement similar to that of the fifth configuration.

The camera lens actuation arrangement 1 in the seventh configuration has a suspension system 41 in the form of a four-bar linkage arrangement that suspends the camera lens element 3 on the support structure 2 in a manner allowing movement of the camera lens element 3 along the optical axis O. The suspension system 41 has the same form as in the fourth configuration of the camera lens arrangement 1. Accordingly, the description of the suspension system 11 given above applies equally to the camera lens actuation arrangement 1 in the seventh configuration and so will not be repeated.

In the seventh configuration, the four lengths 10 of SMA wire are separate pieces 51 of SMA wire arranged in the same manner as the fifth configuration and so the description given above applies equally, including the advantage that the forces applied to the camera lens element 3 perpendicular to the optical axis O are reduced as the forces from the lengths 10 of SMA wire are in opposite directions as between the lengths 10 of SMA wire within each pair and so tend to counteract each other. Such reduction of the lateral forces provides significant advantages because the lateral loading forces on the suspension system 41 are reduced, allowing for a simpler four-bar linkage arrangement as compared to the lengths 10 of SMA wire having the same arrangement as in the first configuration.

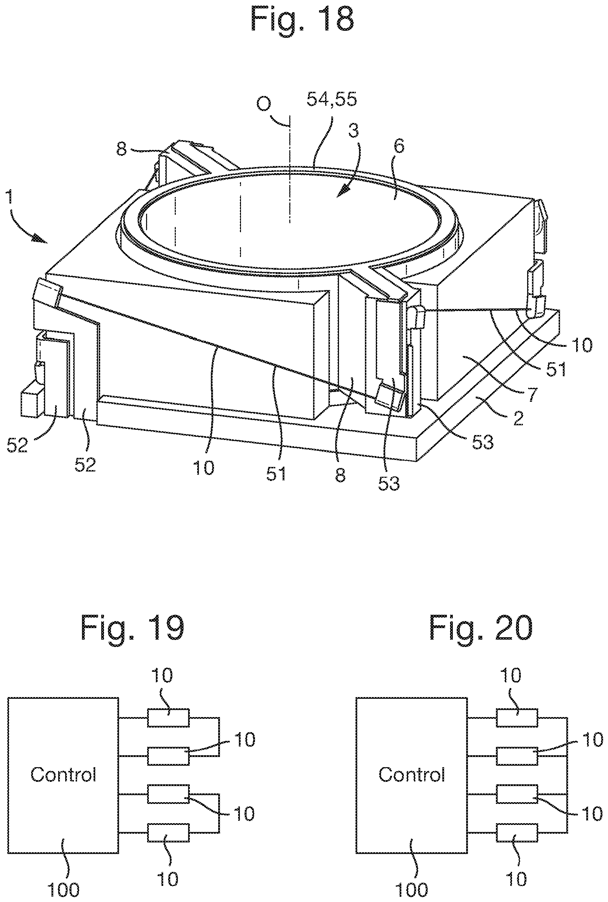

The camera lens actuation arrangement 1 in the eighth configuration is shown in Fig. 18. As will now be described in more detail, in the eighth configuration of the camera lens actuation arrangement 1, the four lengths 10 of SMA wire are formed from four pieces 51 of SMA wire, and the camera lens element 3 is suspended by the lengths 10 of SMA wire without employing a separate suspension system.

In the eighth configuration, the four lengths 10 of SMA wire are separate pieces 51 of SMA wire arranged in the same manner as the fifth configuration and so the description given above applies equally, including the advantage that the forces applied to the camera lens element 3 perpendicular to the optical axis O are reduced as the forces from the lengths 10 of SMA wire are in opposite directions as between the lengths 10 of SMA wire within each pair and so tend to counteract each other. In fact, this reduction in the lateral forces means is sufficiently great that the lengths 10 of SMA wire themselves suspend the camera lens element 3 on the support structure 2, without the need for a separate suspension system.

The camera lens actuation arrangements described above are controlled to move the camera lens element along the optical axis by supply of drive signals to the lengths of SMA wires by a control circuit 100 as will now be described with reference to Figs. 19 and 20 which show two alternative manners of electrical connection. The control circuit 100 may be implemented in an integrated circuit chip attached to the support structure 2.

The control circuit 100 supplies drive signals to the lengths 10 of SMA wire which provide resistive heating to selectively vary the temperature, and hence the degree of contraction, of the lengths 10 of SMA wire. Heating is provided directly by the drive signal. Cooling is provided by reducing the power of the drive signal to allow the lengths of SMA wires to cool by conduction, convection and radiation to their surroundings. Rapid heating and cooling of the lengths 10 of SMA wire is necessary for focus and zoom applications. For this reason, the lengths 10 of SMA wire are relatively thin, typically having a diameter of the order of 25µm, since such thin wire heats and cools very quickly.

In general terms, the control circuit 100 may be configured to generate drive signals as disclosed in any of WO-2007/113478, WO-2008/099156, WO-2008/129291, WO-2009/071898, or WO-2010/089529. In contrast to WO-2007/113478 where the lengths of SMA wire all provide a force in the same direction along the optical axis, due to the opposed nature of the pairs of lengths 10 of SMA wire, the control circuit 100 generates drive signals which control the position of the camera lens element 3 along the optical axis O by providing differential contraction as between the first and second pairs of lengths 10 of SMA wire. For example, increasing the power of drive signals to the first pair of lengths 10 of SMA wire and decreasing the power of drive signals to the other of the pairs of lengths 10 of SMA wire causes the camera lens element 3 to move in the first direction, and vice versa.

In the camera lens actuation arrangement 1, the control circuit 100 is connected to the lengths 10 of SMA wire at the support structure 2, but not at the camera lens element 3. Avoiding the need to make an electrical connection at the camera lens element 3 simplifies the construction, although this is not essential and the control circuit 100 could in principle make electrical connections connected to the lengths 10 of SMA wire at the camera lens element 3.

Fig. 19 illustrates a manner of electrical connection where each of the pairs of lengths 10 of SMA wire are electrically connected together at the camera lens element 3. This applies to each of the first to fourth configurations where the pairs of lengths 10 of SMA wire are electrically connected together because they are portions of the same pieces 15 of SMA wire, and also to the fifth to eighth configurations where the electrical connection is provided at the camera lens element 3 as shown in Fig. 13 by the conductive connectors 54. In this case, the same drive signal is thus supplied through each length 10 of SMA wire within a pair, and as between the first and second pairs the drive signals are separate and provide differential contraction.

Fig. 20 illustrates a manner of electrical connection where all the lengths 10 of SMA wire are electrically connected together at the camera lens element 3. This applies to the fifth to eighth configurations where the electrical connection is provided at the camera lens element 3 as shown in Fig. 14 by the conductive connector 55 which provides a common electrical connection. In this case, drive signals may be applied to each of the lengths 10 of SMA wire to provide differential contraction using a drive scheme of the type disclosed in WO-2012/066285.

## Claims

1. A camera lens actuation arrangement (1) comprising:
a support structure (2) having an image sensor (4) mounted thereon;
a camera lens element (3) arranged to focus an image on the image sensor (4) and having an optical axis;
a suspension system for allowing movement of the camera lens element (3) along the optical axis;
a total of four lengths (10) of SMA wire held between the support structure (2) and the camera lens element (3), each length of SMA wire being inclined as viewed radially outwards of the optical axis, wherein a first pair of the lengths (10) of SMA wire are arranged to apply a force to the camera lens element (3) with a component parallel to the optical axis in a first direction and a second pair of the lengths (10) of SMA wire are arranged to apply a force to the camera lens element (3) with a component parallel to the optical axis in a second direction opposite to the first direction, and
a control circuit (100) configured to drive the two pairs of lengths of SMA wire simultaneously to maintain tension in the SMA wires and hold the camera lens element at a position along the optical axis controlled by the relative contraction of each pair of lengths of SMA wire;
wherein the control circuit (100) is configured to supply drive signals to the lengths (10) of SMA wire which provide resistive heating to selectively vary the temperature, and hence the degree of contraction, of the lengths (10) of SMA wire.

2. A camera lens actuation arrangement according to claim 1, wherein
the lengths (10) of SMA wire are portions of first and second pieces (15) of SMA wire,
the first and second pieces (15) of SMA wire are each connected at their ends to the support structure (2) and hooked over respective hooks (17) on the camera lens element (3), the portions of the first piece (15) of SMA wire on either side of the hook (17) over which they are hooked forming the first pair of lengths (10) of SMA wire and the portions of the second piece (15) of SMA wire on either side of the hook (17) over which they are hooked forming the second pair of lengths (10) of SMA wire, and
the lengths (10) of SMA wire of each pair extend relative to each other at an angle of less than 180° as viewed along the optical axis.

3. A camera lens actuation arrangement according to claim 2, wherein said angle of less than 180° is substantially 90°.

4. A camera lens actuation arrangement according to claim 2 or 3, wherein the first and second pieces (15) of SMA wire are hooked over respective hooks (17) on the camera lens element (3) arranged at opposite angular positions around the optical axis so that the first pair of lengths (10) of SMA wire and the second pair of lengths (10) of SMA wire are arranged to apply forces to the camera lens element (3) perpendicular to the optical axis in opposite directions as between the first pair of lengths (10) of SMA wire and the second pair of lengths (10) of SMA wire.

5. A camera lens actuation arrangement according to claim 1, wherein
each length of SMA wire is arranged on a respective one of four sides of the camera lens element (3) as viewed along the optical axis,
the first pair of lengths (10) of SMA wire are arranged on two sides of the camera lens element (3) that are adjacent each other, and
the second pair of lengths (10) of SMA wire are arranged on the other two sides of the camera lens element (3) that are adjacent each other so that the first pair of lengths (10) of SMA wire and the second pair of lengths (10) of SMA wire are arranged to apply forces to the camera lens element (3) perpendicular to the optical axis in opposite directions as between the first pair of lengths (10) of SMA wire and the second pair of lengths (10) of SMA wire.

6. A camera lens actuation arrangement according to claim 5, wherein
the lengths (10) of SMA wire are portions of first and second pieces (15) of SMA wire, and
the first and second pieces (15) of SMA wire are each connected at their ends to the support structure (2) and hooked over respective hooks (17) on the camera lens element (3), the portions of the first piece (15) of SMA wire on either side of the hook (17) over which they are hooked forming the first pair of lengths (10) of SMA wire and the portions of the second piece (15) of SMA wire on either side of the hook (17) over which they are hooked forming the second pair of lengths (10) of SMA wire.

7. A camera lens actuation arrangement according to claim 1, wherein each length (10) of SMA wire is a separate piece (51) of SMA wire arranged on a respective one of four sides of the camera lens element (3) as viewed along the optical axis.

8. A camera lens actuation arrangement according to claim 7, wherein
the first pair of lengths (10) of SMA wire are arranged on two sides of the camera lens element (3) that oppose each other and are arranged to apply forces to the camera lens element (3) perpendicular to the optical axis in opposite directions as between the first pair of lengths (10) of SMA wire, and
the second pair of lengths (10) of SMA wire are arranged on the other two sides of the camera lens element (3) that oppose each other and are arranged to apply forces to the camera lens element (3) perpendicular to the optical axis in opposite directions as between the second pair of lengths (10) of SMA wire.

9. A camera lens actuation arrangement according to claim 7 or 8, wherein each length (10) of SMA wire is inclined in the same sense as viewed radially outwards of the optical axis.

10. A camera lens actuation arrangement according to any one of claims 7 to 9, wherein the first pair of lengths (10) of SMA wire are electrically connected together at the camera lens element (3) and the second pair of lengths (10) of SMA wire are electrically connected together at the camera lens element (3).

11. A camera lens actuation arrangement according to any one of claims 9 to 10, wherein all the lengths (10) of SMA wire are electrically connected together at the camera lens element (3).

12. A camera lens actuation arrangement according to any one of the preceding claims,
comprising a suspension system(11) suspending the camera lens (3) element on the support structure (2),
wherein the suspension system (11) is a flexure arrangement, a ball bearing arrangement or a four-bar linkage arrangement.

13. A camera lens actuation arrangement according to any one of claims 1 to 11, wherein the first and second pairs of lengths (10) of SMA wire suspend the camera lens element (3) on the support structure (2).

14. A camera lens actuation arrangement according to any one of the preceding claims, wherein the camera lens element (3) comprises one of more lenses (6) having a diameter of no more than 10mm.

15. A camera lens actuation arrangement according to any one of the preceding claims, wherein the control circuit (100) is arranged to supply drive signals to the lengths (10) of SMA wire for moving the camera lens element (3) along the optical axis.

## Patentansprüche

1. Kameraobjektiv-Betätigungsanordnung (1), umfassend:
eine Trägerstruktur (2), auf der ein Bildsensor (4) montiert ist;
ein Kameraobjektivelement (3), das dafür ausgelegt ist, ein Bild auf den Bildsensor (4) zu fokussieren und eine optische Achse aufweist;
ein Aufhängungssystem, das die Bewegung des Kameraobj ektivelements (3) entlang der optischen Achse ermöglicht;
insgesamt vier Längen (10) von SMA-Draht, die zwischen der Trägerstruktur (2) und dem Kameraobjektivelement (3) gehalten werden, wobei jede Länge des SMA-Drahtes von der optischen Achse aus gesehen radial nach außen geneigt ist, wobei ein erstes Paar der Längen (10) des SMA-Drahtes dafür ausgelegt ist, eine Kraft auf das Kameraobjektivelement (3) mit einer Komponente parallel zur optischen Achse in einer ersten Richtung auszuüben, und ein zweites Paar der Längen (10) des SMA-Drahtes dafür ausgelegt ist, eine Kraft auf das Kameraobjektivelement (3) mit einer Komponente parallel zur optischen Achse in einer zweiten Richtung entgegengesetzt zur ersten Richtung auszuüben, und
eine Steuerschaltung (100), die dafür konfiguriert ist, die beiden Paare von Längen von SMA-Drahtabschnitten gleichzeitig anzusteuern, um die Spannung in den SMA-Drähten aufrechtzuerhalten und das Kameraobjektivelement in einer Position entlang der optischen Achse zu halten, die durch die relative Kontraktion jedes Paars von Längen von SMA-Drahtabschnitten gesteuert wird;
wobei die Steuerschaltung (100) dafür konfiguriert ist, Ansteuersignale an die SMA-Drahtlängen (10) zu liefern, die eine Widerstandsheizung bereitstellen, um die Temperatur und damit den Grad der Kontraktion der SMA-Drahtlängen (10) selektiv zu verändern.

2. Kameraobjektiv-Betätigungsanordnung nach Anspruch 1, wobei
die Längen (10) des SMA-Drahtes Abschnitte eines ersten und eines zweiten Stückes (15) des SMA-Drahtes sind,
das erste und das zweite Stück (15) des SMA-Drahtes jeweils an ihren Enden mit der Trägerstruktur (2) verbunden sind und über entsprechende Haken (17) an dem Kameraobjektivelement (3) gehakt werden, die Abschnitte des ersten Stücks (15) SMA-Draht auf beiden Seiten des Hakens (17), über den sie gehakt sind, das erste Paar Längen (10) von SMA-Draht bilden, und die Abschnitte des zweiten Stücks (15) des SMA-Drahtes auf beiden Seiten des Hakens (17), über den sie gehakt sind, das zweite Paar von Längen (10) des SMA-Drahtes bilden, und
die Längen (10) des SMA-Drahtes jedes Paars sich in einem Winkel von weniger als 180° zueinander erstrecken, gesehen entlang der optischen Achse.

3. Kameraobjektiv-Betätigungsanordnung nach Anspruch 2, wobei der Winkel von weniger als 180° im Wesentlichen 90° beträgt.

4. Kameraobjektiv-Betätigungsanordnung nach Anspruch 2 oder 3, wobei das erste und das zweite Stück (15) des SMA-Drahtes über entsprechende Haken (17) an dem Kameraobjektivelement (3) eingehakt sind, die an entgegengesetzten Winkelpositionen um die optische Achse ausgelegt sind, so dass das erste Paar von Längen (10) des SMA-Drahtes und das zweite Paar von Längen (10) des SMA-Drahtes dafür ausgelegt sind, Kräfte auf das Kameraobjektivelement (3) senkrecht zur optischen Achse in entgegengesetzten Richtungen als zwischen dem ersten Paar von Längen (10) des SMA-Drahtes und dem zweiten Paar von Längen (10) des SMA-Drahtes auszuüben.

5. Kameraobjektiv-Betätigungsanordnung nach Anspruch 1, wobei
jede Länge des SMA-Drahtes auf einer j eweiligen von vier Seiten des Kameraobjektivs (3) ausgelegt ist, gesehen entlang der optischen Achse,
das erste Paar von Längen (10) des SMA-Drahtes auf zwei Seiten des Kameraobjektivs (3) ausgelegt ist, die einander benachbart sind, und
das zweite Paar von Längen (10) des SMA-Drahtes auf den anderen beiden Seiten des Kameraobjektivs (3) ausgelegt sind, die einander benachbart sind, so dass das erste Paar von Längen (10) des SMA-Drahtes und das zweite Paar von Längen (10) des SMA-Drahtes dafür ausgelegt sind, Kräfte auf das Kameraobjektivelement (3) senkrecht zur optischen Achse in entgegengesetzten Richtungen als zwischen dem ersten Paar von Längen (10) des SMA-Drahtes und dem zweiten Paar von Längen (10) des SMA-Drahtes auszuüben.

6. Kameraobjektiv-Betätigungsanordnung nach Anspruch 5, wobei
die Längen (10) des SMA-Drahtes Abschnitte eines ersten und eines zweiten Stückes (15) des SMA-Drahtes sind, und
das erste und das zweite Stück (15) des SMA-Drahtes jeweils an ihren Enden mit der Trägerstruktur (2) verbunden sind und über entsprechende Haken (17) an dem Kameraobjektivelement (3) gehakt werden, die Abschnitte des ersten Stücks (15) SMA-Draht auf beiden Seiten des Hakens (17), über den sie gehakt werden, das erste Paar Längen (10) von SMA-Draht bilden, und die Abschnitte des zweiten Stücks (15) SMA-Draht auf beiden Seiten des Hakens (17), über den sie gehakt werden, das zweite Paar Längen (10) von SMA-Draht bilden.

7. Kameraobjektiv-Betätigungsanordnung nach Anspruch 1, wobei jede Länge (10) des SMA-Drahtes ein separates Stück (51) des SMA-Drahtes ist, das auf einer jeweiligen der vier Seiten des Kameraobjektivelements (3) ausgelegt ist, gesehen entlang der optischen Achse.

8. Kameraobjektiv-Betätigungsanordnung nach Anspruch 7, wobei
das erste Paar von Längen (10) des SMA-Drahtes auf zwei Seiten des Kameraobjektivelements (3) angeordnet ist, die einander gegenüberliegen und dafür ausgelegt sind, Kräfte auf das Kameraobjektivelement (3) senkrecht zur optischen Achse in entgegengesetzten Richtungen zwischen dem ersten Paar von Längen (10) des SMA-Drahtes auszuüben, und
das zweite Paar von Längen (10) des SMA-Drahtes auf den anderen zwei Seiten des Kameraobjektivelements (3) angeordnet ist, die einander gegenüberliegen und dafür ausgelegt sind, Kräfte auf das Kameraobjektivelement (3) senkrecht zur optischen Achse in entgegengesetzten Richtungen zwischen dem zweiten Paar von Längen (10) des SMA-Drahtes auszuüben.

9. Kameraobjektiv-Betätigungsanordnung nach Anspruch 7 oder 8, wobei jede Länge (10) des SMA-Drahtes in der gleichen Richtung geneigt ist, wie radial nach außen von der optischen Achse aus gesehen.

10. Kameraobjektiv-Betätigungsanordnung nach einem der Ansprüche 7 bis 9, wobei das erste Paar von Längen (10) des SMA-Drahtes am Kameraobjektivelement (3) elektrisch miteinander verbunden ist und das zweite Paar von Längen (10) des SMA-Drahtes am Kameraobjektivelement (3) elektrisch miteinander verbunden ist.

11. Kameraobjektiv-Betätigungsanordnung nach einem der Ansprüche 9 bis 10, wobei alle Längen (10) des SMA-Drahtes am Kameraobjektivelement (3) elektrisch miteinander verbunden sind.

12. Kameraobjektiv-Betätigungsanordnung nach einem der vorhergehenden Ansprüche,
die ein Aufhängungssystem (11) umfasst, das das Kameraobjektivelement (3) an der Trägerstruktur (2) aufhängt,
wobei das Aufhängungssystem (11) eine Biegeanordnung, eine Kugellageranordnung oder eine Viergelenksanordnung ist.

13. Kameraobjektiv-Betätigungsanordnung nach einem der Ansprüche 1 bis 11,
wobei die ersten und zweiten Paare von Längen (10) des SMA-Drahtes das Kameraobjektivelement (3) an der Trägerstruktur (2) aufhängen.

14. Kameraobjektiv-Betätigungsanordnung nach einem der vorhergehenden Ansprüche, wobei das Kameraobjektivelement (3) eine oder mehrere Linsen (6) mit einem Durchmesser von nicht mehr als 10 mm aufweist.

15. Kameraobjektiv-Betätigungsanordnung nach einem der vorhergehenden Ansprüche, wobei die Schaltung (100) dafür ausgelegt ist, den Längen (10) des SMA-Drahtes Antriebssignale zuzuführen, um das Kameraobjektivelement (3) entlang der optischen Achse zu bewegen.

## Revendications

1. Agencement d'actionnement d'objectif d'appareil de prise de vues (1) comprenant :
une structure de support (2) sur laquelle est monté un capteur d'image (4) ;
un élément d'objectif d'appareil de prise de vues (3) agencé pour focaliser une image sur le capteur d'image (4) et ayant un axe optique ;
un système de suspension permettant le déplacement de l'élément d'objectif d'appareil de prise de vues (3) le long de l'axe optique ;
un total de quatre longueurs (10) de fil AMF maintenues entre la structure de support (2) et l'élément d'objectif d'appareil de prise de vues (3), chaque longueur de fil AMF étant inclinée - en vue radiale - vers l'extérieur de l'axe optique, une première paire de longueurs (10) de fil AMF étant agencée pour appliquer une force sur l'élément d'objectif d'appareil de prise de vues (3) avec une composante parallèle à l'axe optique dans une première direction et une deuxième paire de longueurs (10) de fil AMF étant agencée pour appliquer une force sur l'élément d'objectif d'appareil de prise de vues (3) avec une composante parallèle à l'axe optique dans une deuxième direction opposée à la première direction, et
un circuit de commande (100) conçu pour piloter simultanément les deux paires de longueurs de fil AMF afin de maintenir la tension dans les fils AMF et de retenir l'élément d'objectif d'appareil de prise de vues en un emplacement situé le long de l'axe optique, sous la commande de la contraction relative de chaque paire de longueurs de fil AMF ;
ledit circuit de commande (100) étant conçu pour fournir des signaux de pilotage aux longueurs (10) de fil AMF qui fournissent un chauffage résistif pour faire varier sélectivement la température, et donc le degré de contraction, des longueurs (10) de fil AMF.

2. Agencement d'actionnement d'objectif d'appareil de prise de vues selon la revendication 1, dans lequel
les longueurs (10) de fil AMF sont des portions de première et deuxième pièces (15) de fil AMF,
les première et deuxième pièces (15) de fil AMF sont chacune reliées à leurs extrémités à la structure de support (2) et passées sur des crochets (17) respectifs présents sur l'élément d'objectif d'appareil de prise de vues (3), les portions de la première pièce (15) de fil AMF de chaque côté du crochet (17) sur lequel elles passent formant la première paire de longueurs (10) de fil AMF et les portions de la deuxième pièce (15) de fil AMF de chaque côté du crochet (17) sur lequel elles passent formant la deuxième paire de longueurs (10) de fil AMF, et
les longueurs (10) de fil AMF de chaque paire s'étendent l'une par rapport à l'autre selon un angle inférieur à 180°, vu le long de l'axe optique.

3. Agencement d'actionnement d'objectif d'appareil de prise de vues selon la revendication 2, dans lequel ledit angle est inférieur à 180° et est sensiblement égal à 90°.

4. Agencement d'actionnement d'objectif d'appareil de prise de vues selon la revendication 2 ou 3, dans lequel la première et la deuxième pièce (15) de fil AMF passent sur des crochets respectifs (17) présents sur l'élément d'objectif d'appareil de prise de vues (3) et agencés dans des positions angulaires opposées autour de l'axe optique de manière que la première paire de longueurs (10) de fil AMF et la deuxième paire de longueurs (10) de fil AMF sont agencées de façon à appliquer des forces sur l'élément d'objectif d'appareil de prise de vues (3) perpendiculairement à l'axe optique dans des directions opposées entre la première paire de longueurs (10) de fil AMF et la deuxième paire de longueurs (10) de fil AMF.

5. Agencement d'actionnement d'objectif d'appareil de prise de vues selon la revendication 1, dans lequel
chaque longueur de fil AMF est agencée sur un côté respectif parmi les quatre côtés de l'élément d'objectif d'appareil de prise de vues (3), vu le long de l'axe optique,
la première paire de longueurs (10) de fil AMF est agencée sur deux côtés de l'élément d'objectif d'appareil de prise de vues (3) qui sont adjacents l'un à l'autre, et
la deuxième paire de longueurs (10) de fil AMF est agencée sur les deux autres côtés de l'élément d'objectif d'appareil de prise de vues (3) qui sont adjacents l'un à l'autre de manière que la première paire de longueurs (10) de fil AMF et la deuxième paire de longueurs (10) de fil AMF sont agencées de façon à appliquer des forces sur l'élément d'objectif d'appareil de prise de vues (3) perpendiculairement à l'axe optique dans des directions opposées entre la première paire de longueurs (10) de fil AMF et la deuxième paire de longueurs (10) de fil AMF.

6. Agencement d'actionnement d'objectif d'appareil de prise de vues selon la revendication 5, dans lequel
les longueurs (10) de fil AMF sont des portions de première et deuxième pièces (15) de fil AMF, et
les première et deuxième pièces (15) de fil AMF sont chacune reliées à leurs extrémités à la structure de support (2) et passent sur des crochets (17) respectifs présents sur l'élément d'objectif d'appareil de prise de vues (3), les portions de la première pièce (15) de fil AMF de chaque côté du crochet (17) sur lequel elles passent formant la première paire de longueurs (10) de fil AMF et les portions de la deuxième pièce (15) de fil AMF de chaque côté du crochet (17) sur lequel elles passent formant la deuxième paire de longueurs (10) de fil AMF.

7. Agencement d'actionnement d'objectif d'appareil de prise de vues selon la revendication 1, dans lequel chaque longueur (10) de fil AMF est une pièce séparée (51) de fil AMF disposée sur un des quatre côtés respectifs de l'élément d'objectif d'appareil de prise de vues (3), vu le long de l'axe optique.

8. Agencement d'actionnement d'objectif d'appareil de prise de vues selon la revendication 7, dans lequel
la première paire de longueurs (10) de fil AMF est agencée sur deux côtés de l'élément d'objectif d'appareil de prise de vues (3) opposés l'un à l'autre et est agencée pour appliquer des forces sur l'élément d'objectif d'appareil de prise de vues (3) perpendiculairement à l'axe optique dans des directions opposées entre la première paire de longueurs (10) de fil AMF, et
la deuxième paire de longueurs (10) de fil AMF est agencée sur les deux autres côtés de l'élément d'objectif d'appareil de prise de vues (3) opposés l'un à l'autre et est agencée pour appliquer des forces sur l'élément d'objectif d'appareil de prise de vues (3) perpendiculairement à l'axe optique dans des directions opposées entre la deuxième paire de longueurs (10) de fil AMF.

9. Agencement d'actionnement d'objectif d'appareil de prise de vues selon la revendication 7 ou 8, dans lequel chaque longueur (10) de fil AMF est inclinée dans le même sens - en vue radiale - vers l'extérieur de l'axe optique.

10. Agencement d'actionnement d'objectif d'appareil de prise de vues selon l'une des revendications 7 à 9, dans lequel la première paire de longueurs (10) de fil AMF est reliée électriquement à l'élément d'objectif d'appareil de prise de vues (3) et la deuxième paire de longueurs (10) de fil AMF est reliée électriquement à l'élément d'objectif d'appareil de prise de vues (3).

11. Agencement d'actionnement d'objectif d'appareil de prise de vues selon l'une des revendications 9 et 10,
dans lequel toutes les longueurs (10) de fil AMF sont reliées électriquement à l'élément d'objectif d'appareil de prise de vues (3).

12. Agencement d'actionnement d'objectif d'appareil de prise de vues selon l'une des revendications précédentes,
comprenant un système de suspension (11) suspendant l'élément d'objectif d'appareil de prise de vues (3) sur la structure de support (2),
ledit système de suspension (11) étant un agencement de flexion, un agencement de roulement à billes ou un agencement de quadrilatère articulé.

13. Agencement d'actionnement d'objectif d'appareil de prise de vues selon l'une des revendications 1 à 11,
dans lequel les première et deuxième paires de longueurs (10) de fil AMF suspendent l'élément d'objectif d'appareil de prise de vues (3) sur la structure de support (2).

14. Agencement d'actionnement d'objectif d'appareil de prise de vues selon l'une des revendications précédentes,
dans lequel l'élément d'objectif d'appareil de prise de vues (3) comprend une lentille (6), parmi plusieurs, dont le diamètre ne dépasse pas 10 mm.

15. Agencement d'actionnement d'objectif d'appareil de prise de vues selon l'une des revendications précédentes,
dans lequel le circuit de commande (100) est agencé pour fournir des signaux de pilotage aux longueurs (10) de fil AMF pour déplacer l'élément d'objectif d'appareil de prise de vues (3) le long de l'axe optique.
